(19) Europäisches Patentamt

European Patent Office

Office européen des brevets

(11) Veröffentlichungsnummer: **0 377 232**

**A1**

# (12) EUROPÄISCHE PATENTANMELDUNG

(21) Anmeldenummer: 89202418.3

(22) Anmeldetag: 18.09.89

(51) Int. Cl.5: **A01G 7/02**

(30) Priorität: 02.01.89 DE 3900017
10.01.89 DE 3900523

(43) Veröffentlichungstag der Anmeldung:
**11.07.90 Patentblatt 90/28**

(84) Benannte Vertragsstaaten:
**ES GR**

(71) Anmelder: **Technica
Entwicklungsgesellschaft mbH & Co. KG
Robert-Bosch-Strasse 4-6
D-2418 Ratzeburg(DE)**

(72) Erfinder: **Kückens, Alexander
"Bredenland", Hauptstrasse 6
D-2401 Gross-Sarau, Post Gross-Grönau(DE)**
Erfinder: **Köhl, Horst
Waldstrasse 40
D-2060 Bad Oldesloe(DE)**

(74) Vertreter: **Döring, Rudolf, Dr.-Ing. et al
Patentanwälte Dr.-Ing. R. Döring Dipl.-Phys.
Dr. J. Fricke Dipl.-Phys. M. Einsel
Josephspitalstrasse 7
D-8000 München 2(DE)**

(54) **Verfahren zur Unterstützung des Abbaues von hohen CO2-Anteilen der Atmosphäre über Kulturpflanzen in bodennahen Bereichen.**

(57) Es wird ein Verfahren vorgeschlagen, bei dem man die Aufnahmefähigkeit von Pflanzen für in der Atmosphäre in Übermaß enthaltenem $CO_2$-Gas biokatalytisch und/oder enzymatisch steigert, indem man wenigstens einmal pro Wachstumsperiode bewässert und über das Wasser Spuren von $CO_2$ und $H_2CO_3$ insb. in den Wurzelbereich der Pflanzen einbringt, und zwar in einem pflanzenspezifischen und von Boden- und Wasserbeschaffenheit abhängigen, optimalen Umfang.

EP 0 377 232 A1

# Verfahren zur Unterstützung des Abbaues von hohen CO₂-Anteilen der Atmosphäre über Kulturpflanzen in bodennahen Bereichen

Die Erfindung betrifft ein Verfahren zum Verstärken des Abbaues von überhöhten $CO_2$ Anteilen aus bodennahen Bereichen der Atmosphäre.

Es ist bekannt, daß die grünen Pflanzen in dem als Photosynthese bekannten Prozeß mit Hilfe des Sonnenlichts und des Chlorophylls aus $CO_2$ und $H_2O$ Kohlenhydrate bilden. Nach Berechnungen werden so jährlich etwa 275 Milliarden Tonnen $CO_2$ in organische Verbindungen überführt und eine äquivalente Menge lebenswichtigen $O_2$ freigesetzt.

Auf der anderen Seite ist es bekannt, daß die von Menschen verursachte $CO_2$-Konzentration der Atmosphäre jährlich zunimmt und zwar um etwa 1 ppm.

Trotz dieses zunehmenden $CO_2$ Angebotes sterben Wälder und sind Kulturpflanzen weithin verringerter Widerstandsfähigkeit gegen Krankheiten ausgesetzt.

Die Gründe hierfür, die hier nicht im einzelnen dargelegt werden können, liegen zum beachtlichen Teil in der Ignorierung unterschiedlicher Gesetze, nämlich des Verhaltens von $CO_2$ in der Atmosphäre und im Wasser und in der erhöhten Belastung der Atmosphäre durch Schwefel- und Salpetersäure und deren störende Einflüsse sowohl auf einen ausgewogenen $CO_2$-Biokreislauf, als auch auf die Effektivität der photosynthetischen Prozesse.

Während man klein- und großtechnisch bereits wirksam bestimmte Anteile von Abgasen ausfiltern kann, bevor sie in die Atmosphäre gelangen, sind entsprechende Möglichkeiten zum Eliminieren von $CO_2$ aus Abgasen nicht in Sicht.

Um die $CO_2$-Zunahme in der Atmosphäre abzubremsen, ist die Erhebung besonderer Steuern für die Erzeuger von $CO_2$ in Abgasen vorgeschlagen worden, um diese Maßnahmen zu erzwingen, die den $CO_2$-Ausstoß verringern. Um den überschuß an $CO_2$ aus der Atmosphäre abzubauen, ist in USA der Vorschlag gemacht worden, großflächig aufzuforsten, da man weiß, daß junge Bäume eine wesentlich höhere photosynthetische Aktivität entwickeln, als dies bei ausgewachsenen Bäumen der Fall ist. Vorgeschlagen von amerikanischen Wissenschaftlern wurde ebenfalls, solche Bäume einzulagern, um durch Oxidation nicht erneut die $CO_2$-Speicher zu aktivieren. Konkrete Lösungen für das $CO_2$-überschußproblem sind jedoch faktisch nirgends in Sicht.

Es ist seit langem bekannt, daß man bei Kulturpflanzen höhere Erträge durch Begasung mit $CO_2$ (in Glashäusern) oder durch Besprühen oder Spritzen mit $CO_2$-haltigem Wasser (Freilandkulturen) erzielen kann. Hier geht es jedoch nur um die gezielte Beeinflussung des Ertrags und damit um die Verbesserung der Wirtschaftlichkeit im gartenbau und in der Landwirtschaft.

Demgegenüber ist es Ziel der Erfindung, die Möglichkeit zu schaffen, dem zunehmenden Gehalt von $CO_2$ in der Atmosphäre mit einfachen und preiswerten Mitteln entgegenzuwirken.

Diese Aufgabe wird dadurch gelöst, daß man die Aufnahmefähigkeit von Pflanzen, insbesondere von jüngeren Pflanzen, für in der Atmosphäre in übermaß enthaltenem $CO_2$ auf biokatalytischem und/oder enzymatischem Wege gegenüber der normalen, pflanzenspezifischen Aufnahmefähigkeit steigert, indem man insbes, den Wurzelbereich wenigstens einmal pro Wachstumsperiode bewässert, und das dazu verwendete Wasser mit Spuren an $CO_2$ und $H_2CO_3$ so anreichert, daß das Wasser bei Erreichen des Wurzelbereichs einen pflanzenspezifischen und von der Bodenbeschaffenheit abhängigen, vorbestimmten Gehalt an $CO_2$ bis maximal etwa 0,5 g/Liter Wasser und an $H_2CO_3$ bis maximal etwa 0,015 g/Liter Wasser aufweist.

Dabei ist es von besonderem Vorteil, wenn man auch vor allem solche Pflanzen oder in solchen Gebieten bei bzw. in denen eine Bewässerung normalerweise nicht üblich oder nicht notwendig ist, wenigstens einmal pro Wachstumsperiode bewässert.

Das Verfahren nach der Erfindung ist daher nicht nur für Pflanzen in ariden oder trockenen Gebieten besonders sinnvoll, sondern bietet die Vorteile auch in gemässigten Zonen, sofern es sich um Böden handelt, die wie dies weithin bei alten Kulturböden der Fall ist, vor allem eine Verarmung an Humus zeigen.

Das Verfahren nach der Erfindung ist für alle Pflanzen, einschließlich Bäume, Büsche, oder dgl. in nicht-bewirtschafteten Bereichen ebenso wie für alle Kulturpflanzen in der Landwirtschaft geeignet. Je großräumiger das Verfahren eingesetzt wird, umso größer ist die Wirkung für den Abbau von $CO_2$-überschüssen aus der Atmosphäre. Besonders geeignet sind junge Pflanzen mit ohnehin hoher Rate an Aufbau von Biomasse.

Vergleichsversuche haben ergeben, daß durch Einsatz des Verfahrens nach der Erfindung von den behandelten Pflanzen $CO_2$ us der Atmosphäre in unwahrscheinlich hohem Umfang mehr entnommen und in Biomasse umgesetzt werden, als Vergleichspflanzen, die zwar auch bewässert wurden, jedoch mit Wasser ohne gesteuerte Anreicherung mit Spuren von $CO_2$ und $H_2CO_3$. Die Vergleichsversuche ergaben eindeutig, daß das Mehr an Biomasse nicht direkt aus dem Kohlenstoffangebot des zugeführten Kohlendioxids stammen kann.

Vielmehr können die erzielten Zuwachsraten mit der C bindenden Mehrproduktion nur über die photosynthetischen Prozesse der $CO_2$-Assimilation entstehen, die durch die Behandlung mit dem Verfahren nach der Erfindung angeregt werden. Bei dieser Behandlung sind somit biokatalytische oder bioenzymatische oder ähnliche Effekte wirksam, die sehr hohe Multiplikationsfaktoren - gegenüber dem eingesetzten $CO_2$ - zur pflanzenspezifischen $CO_2$-Aufnahmefähigkeit auslösen.

Wesentlich für diesen Erfolg ist, daß insbes. der Wurzelbereich bewässert wird, da über physikalisch im Wasser gebundenes $CO_2$ ein vorbestimmtes Verhältnis zum Chemisch gebundenen $H_2CO_3$ entsteht. Diese Kohlensäure und ihre Dissoziationsprodukte üben insbes. über die Wurzeln erheblichen Einfluß auf die Stoffwechselprozesse der Pflanze, insbes. den Photosyntheseprozeß aus, wodurch die biokatlytischen oder bioenzymatischen Einflüsse in der aufgezeigten Weise praktisch zur Wirkung kommen, auch wenn noch nicht alle Details dieser physikalischen und/oder chemischen Vorgänge in der Pflanze wissenschaftlich erklärbar sind.

Hinzu kommt, daß mit der $CO_2$- und der $H_2CO_3$-Zufuhr mit dem Gießwasser in den Wurzelbereich nachweisbar das Wurzelwachstum sowohl bezüglich Wurzellänge als auch bezüglich der Anteile der Feinwurzeln günstig beeinflußt wird. Damit wird neben der Anregung der Photosynthese auch das Volumen des Erdreichs, aus dem die Pflanze Nährstoffe aufnehmen kann, deutlich erweitert. Eine weitere Begünstigung ergibt sich dadurch, daß $H_2CO_3$ im Gießwasser die im Boden vorhandenen oder in den Boden eingebrachten Mineralien durch Ionisation pflanzenverfügbar macht.

Es ist daher häufig möglich, soweit eine künstliche Düngung notwendig ist, mit wesentlich geringeren Mengen an Düngemitteln die gleiche Wachstumsbegünstigung, wie bisher mit der vollen Düngemittelzugabe, zu erzielen, bzw. diese in stärkerem Umfang zu erschließen.

Da durch das bessere Wurzelwachstum und die biokatalytische oder bioenzymatische Anregung der photosynthetischen Aktivitäten der Pflanze der Wuchs der Pflanze wesentlich kräftiger ist, erweisen sich die so behandelten Pflanzen auch widerstandsfähiger gegenüber Krankheitsdruck und Schädlingsbefall. Es sind - soweit überhaupt erforderlich - Pestizide oder dgl. Behandlungsmittel zumeist nur in wesentlich verringerten Mengen erforderlich.

Der Einsatz von $CO_2$ erfolgt praktisch nur in Spuren, so daß der Kostenaufwand für das $CO_2$ kaum ins Gewicht fällt. Es kommt daher auch nicht so sehr auf mehr oder weniger geringe Verluste an Kohlendioxid beim Imprägnieren des Wassers mit $CO_2$ an. Das Wasser kann daher kontinuierlich oder diskontinuierlich mit einem gegenüber dem Druck des zuströmenden Wassers geringeren Gasdruck, wie bei den unter dem Warenzeichen "Carborain" bekannten Imprägnierungsgeräten, oder auch mit leichtem Überdruck des Gases gegenüber dem Druck des Wassers erfolgen, so daß Imprägnierungsgeräte sehr wirtschaftlich eingesetzt werden können.

Bei der Wurzelbewässerung mit $CO_2$-haltigem Wasser wird der Gehalt an $CO_2$ zweckmäßigerweise überwacht und in möglichst engen Grenzen gehalten. Untersuchungen haben nämlich gezeigt, daß der photosynthetische Prozeß und das Wurzelwachstum empfindlich schon auf geringstes überschreiten des pflanzenspezifischoptimalen Gehalts an $CO_2$ reagieren, und zwar im negativen Sinne.

Bevorzugt wird die Anreicherung des Wassers mit $CO_2$ so gesteuert, daß der Anteil von $CO_2$ zwischen 0,05 und 0,5 g/Liter Wasser liegt. Wenn man die pflanzenspezifische Abhängigkeit des Wurzelwachstums von Gehalt des Gießwassers and $CO_2$ kennt oder leicht feststellen kann, kann die obere Grenze des Gehalts an $CO_2$ und $H_2CO_3$ im Wasser in Abhängigkeit von der Bodenbeschaffenheit so gesteuert werden, daß die Zunahme des Wurzelwachstums einen Maximumwert erreicht oder gerade überschreitet.

Bei der kontinuierlichen Überwachung der Imprägnierung kann die Zufuhr von $CO_2$ in die Imprägnierungszone kontinuierlich und stufenlos durch überwachung der Einhaltung eines eng begrenzten, auf positive, wie ebenso auf negative Ionisationsprodukte im Wasser optimal abgestellten pflanzenspezifischen pH-Wert geregelt werden. Der pH-Wert kann dabei in einem Bereich zwischen 5,5 und 7,5 - vorzugsweise zwischen 6,0 und 7,0 - eingestellt werden. Dabei ist zu beachten, daß nicht Nährsalze als solche, sondern nur deren Ionisationsprodukte den Pflanzen verfügbar sind. Die Ionisation solcher Nährstoffe ist abhängig vom pH-Wert. Bei dem Verfahren nach der Erfindung trägt die Kohlensäure zur Ionisation aller wichtigen Nährstoffe und Spurenelemente bei, indem sie die hierfür notwendigen $H^+$-Ionen bereitstellt. Sie liefert mit den verbleibenden Dissoziationsformen aber auch wichtige Moleküle und Elemente für den gesamten Pflanzenaufbau bis hin zum Assimilat. Die Vorgänge können noch dadurch begünstigt werden, daß man dem Wasser in Abhängigkeit von seiner chemischen Beschaffenheit und von der Bodenbeschaffenheit eines oder mehrerer der Spurenelemente aus der Gruppe Mn, Mg, Zn und $Fe_2$ in kleinen Mengen zudosiert.

Die amerikanische Wissenschaft bezeichnet den $CO_2$-Austausch der Pflanzen als CER, d. h. Carbondioxide Exchange Rate. Da die Funktion der Steuerung des $CO_2$-Exchange-Faktors nicht bekannt ist, sei hierauf kurz erklärend eingegangen:

Auf der inneren Stomatamembran befindet sich ein Wasserverdunstungsfilm, der die allgemein bekannten pflanzenphysiologischen Wirkungen ausübt (Verdunstungseffekt). Diesen Verdunstungsfilm muß das Kohlendioxid, will es ins Pflanzeninnere zur Auslösung photosynthetischer Effekte gelangen, passieren. Hier gelten, wie bereits eingangs erwähnt, die Gesetze der Lösung von Kohlendioxid im Wasser, also nicht mehr diejenigen der Atmosphäre. Danach entsteht in einer gewissen Proportion Kohlensäure, $H_2CO_3$ und deren Dissoziationsformen und zwar chemisch gelöst, während das Kohlendioxid physikalisch gebunden bleibt und dadurch eine Pufferwirkung ausübt. Durch die niedrige Temperatur des Verdunstungsfilms werden Aufnahmefähigkeit und Bindung des physikalisch gelösten Kohlendioxids begünstigt. Werden jetzt durch Aktivierung der Photosynthese durch Spurenelemente, wozu auch die Dissoziationsformen der Kohlensäure gehören, höhere $CO_2$-Anforderungen ausgelöst, so entsteht an der Transferstelle eine chemische Unterkonzentration. Durch Vergrößerung dieses Konzentrationsgefälles wird die Aufnahme der Kohlensäure bzw. deren Dissoziationsformen beschleunigt. Somit wird auch der CER-Faktor durch die Pflanze steuerbar.

Mit der optimierten $CO_2$- Bewässerung kann zugleich auch gedüngt werden. Dabei werden nur Nährstoffe gedüngt, die im Boden nur minimal vorhanden sind. Das kann unter Umständen nur ein einziges Nähr- oder ein Spurenelement sein, wenn alle anderen Nährstoffe vorhanden sind. In diesen Fällen sind nur geringe Mengen $CO_2$ notwendig, um den eingestellten pH-Sollwert kurzfristig zu erreichen. Es kann in einigen Fällen durchaus von besonderem Vorteil sein, wenn das mit $CO_2$ auf diese Weise imprägnierte Wasser den Aufnahmeorganen der Pflanzen, insbesondere im rhizogenen Bereich, im wesentlichen ständig zur Verfügung gestellt wird. Dies läßt sich mit den bekannten oberirdischen oder im Boden versenkt angeordneten Tröpfchenbewässerungssystemen verwirklichen. Hierbei wird die Wasserzufuhr zu dem Wurzelbereich durch den Wasserbedarf der Pflanze mehr oder weniger selbsttätig geregelt. Es wird betont, daß auch in diesem Fall die pro Liter Wasser zugeführte Menge an $CO_2$ ständig und feinfühlig in Abhängigkeit von der Beschaffenheit des Wassers stufenlos geregelt wird.

Zur Durchführung des Verfahrens kann die Grundmenge an $CO_2$ in Abhängigkeit von dem Druck oder der menge des zuströmenden Wassers grob eingestellt werden, während die Feinsteuerung des $CO_2$-Anteils in Abhängigkeit von der Beschaffenheit des Wassers im zuvor beschriebenen Sinne erfolgt.

Aus der Patentliteratur, insbesondere aus den Patenten des Anmelders, geht hervor, daß bereits Imprägnierungsgeräte auf dem Markt sind, z. B. "Carborain" (s. "Landscape & Irrigation", Juli 1989, Seite 118), die mit hoher Präzision Kohlendioxid in das Gießwasser dosieren. Eine dosierte Einstellung mit einer Genauigkeit von 100 mg/Liter ist mit diesen Geräten durchaus möglich.

In Fachzeitschriften der verschiedensten Anwendungsbereiche, wo es besonders auf hohe Präzision ankommt, z. B. bei der Weinauffrischung, können die Geräte bisher nicht erreichte Genauigkeit erzielen. Somit wären die Anforderungen wie durch die Wissenschaft bereits nachgewiesen mit den auf dem Markt vorhandenen Geräten erzielbar. Da aber sowohl die Bodenbeschaffenheit und vor allem die Qualität des Wassers nie präzise eingehalten werden kann kann es trotz hoher Präzision zu einer über- oder Unterdosierung an $CO_2$ im Wasser kommen. Hierbei können die Werte so verschoben werden, daß z. B. durch überkonzentration negative Effekte auftreten können. Wird ferner berücksichtigt, daß erfindungsgemäß ein Multiplikationsfaktor zwischen 10 und 1000 eintritt in der Proportion zum eingesetzten wasserimprägnierten Kohlendioxid und dem durch die Pflanze gebundenen $CO_2$, werden ebenfalls geringe negative Einwirkungen über den Multiplikationsfaktor unverhältnismäßig stark vergrößert. Deshalb setzt die Erfindung voraus, daß nicht nur mir hoher Präzision imprägniert wird, sondern durch Feinsteuerung laufend die Wasserqualität so überwacht wird, daß die Fehlerquellen minimiert werden und somit die höchst mögliche $CO_2$-Bindung aus der Atmosphäre erfolgt.

Besonders wichtig ist z. B. der Anteil des Wassers an ionisierungsfähigen Mineralien und Spurenelementen. Diese können einen Teil des imprägnierten Kohlendioxids puffern, wodurch das Erreichen eines richtigen Sollwertes an $CO_2$-Bindung problematisch wird.

Gleichzeitig weist das Wasser einen unterschiedlichen pH-Wert auf, der wiederum durch das zugeführte $CO_2$ und der damit ausgelösten chemischen Bindung von $H_2CO_3$ beeinflußt wird. Aus dem Grunde sieht die Erfindung vor, daß die Imprägnierungseinrichtung laufend auf Qualitätsschwankungen des Wassers eingeht und die Gefahren einer über- und Unterdosierung an $CO_2$ aussteuert. In der Regel wird der pH-Wert des Wassers nur geringfügig abgesenkt, wobei die Beschaffenheit oder Qualität des Wassers in einem hohen Maß berücksichtigt wird. Der Sollwert für den Base/Säuregehalt des Wassers wird zweckmäßigerweise in Abhängigkeit von dem spezifischen Bedarf der Kulturpflanzen an pflanzenverfügbaren Ionisationsprodukten und/oder auch vom Gehalt des Kulturbodens an Nährsalzen abhängig eingestellt, die durch ionisierung pflanzenverfügbar gemacht werden sollen. Es gibt inzwischen zahlreiche Untersuchungen über den pflanzenspezifischen $CO_2$- $H_2CO_3$-Bedarf. Ebenso bereitet es keine Schwierigkeiten, die Nährstoffbeschaffenheit des Bodens zu ermitteln. Jeder dieser ermittelten Werte kann einzeln oder auch gemeinsam für die Bestimmung des Sollwerts herangezogen werden. Zur Berücksichtigung der Beschaffenheit des verwendeten Wassers kann zweckmäßigerweise der Säure/Base-Wert des imprägnierten Wassers laufend gemessen werden. Schon bei geringen Abweichungen von einem vorgegebenen Sollwert wird ein Schrittmotor angesteuert, der den Gasdurchtrittsquerschnitt einer Zuführungsdüse oder einer Zuführungsdrossel, über die das $CO_2$-Gas der Imprägnierungszone zugeführt wird, verändert.

Die Steuerungsmöglichkeit hierbei ist so genau, daß selbst Schwankungen der Beschaffenheit oder Qualität von Wasser aus der gleichen Wasserquelle berücksichtigt und in dem Einfluß auf die Ansteuerung des gewünschten Base/Säure-Wertes kompensiert werden könnten.

Sollten Wasser und Boden von Haus aus nicht ausreichend ionisierbare pflanzennotwendige Bestandteile enthalten, können die fehlenden Mineralien und/oder Spurenelemente dem Wasser zudosiert werden.

Ein wichtiger Nebeneffekt der Anwendung gemäß dem neuen Verfahren ist - zumindest im Bereich von zu Nährmitteln bestimmten Kulturpflanzen - daß nachweisbar durch die Behandlung der Pflanzen mit dem Verfahren nach der Erfindung die Pflanzen befähigt werden, in der Biomasse im überschuß eingebaute Stickstoffverbindungen bevorzugt abzubauen, so daß die Belastung der Nährmittel mit zuviel Stickstoffverbindungen in markanter Weise vermindert wird, was teure Verfahren erübrigt, die überschüssigen Verbindungen aus den Nährstoffen auszuscheiden (siehe Telefax-Kopie, Qualitätszeugnis der staatlich dänischen Pflanzenforschung).

Ferner ist bekannt, daß hiermit nicht nur gesundheitsschädliche Prozesse, ausgelöst durch hohe Nitratanteile, vermieden werden, sondern gleichzeitig wird die Bildung von Vitaminen gefördert und das äußere Pflanzengewebe verfestigt, so daß verschiedene Schädlinge durch eine verfestigte Oberfläche nicht penetrieren können.

Die Erfindung wird durch die beigefügten Zeichnungen und das darin ausgeführte Ausführungsbeispiel noch leichter verständlich.

Fig. 1 zeigt eine Vorrichtung zur Ausführung des Verfahrens, während

Fig. 2 das Einpendeln des Ist-Wertes auf den gewünschten Sollwert veranschaulicht.

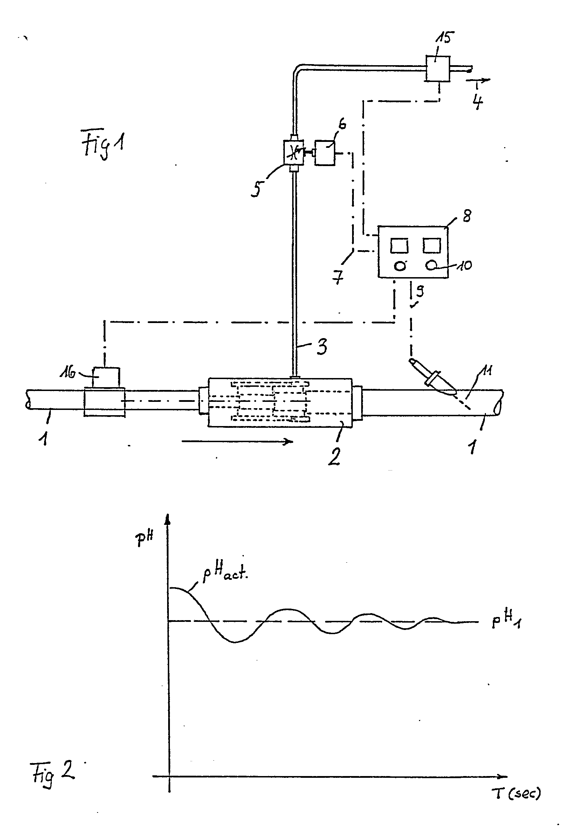

Die Figur 1 zeigt eine Wasserversorgungsleitung 1, durch die das Gießwasser einer $CO_2$-Imprägnierungszone kontinuierlich zugeführt wird. Die Imprägnierungszone ist in Fig. 1 durch ein Imprägnierungsgerät 2 wiedergegeben. Dieses ist z. B. das bereits erwähnte und unter dem Warenzeichen "Carborain" bekannte Imprägnierungsgerät. Das Gerät steht über die Leitung 3 mit einer nicht gezeigten und durch den Pfeil 4 angedeuteten $CO_2$-Gasdruckquelle in Verbindung. In der Leitung 3 ist ein Drosselventil oder eine Zuführungsdüse 5 mit veränderlichem Drossel- oder Düsenquerschnitt vorgesehen. Die Verstellung des Querschnitts erfolgt mit Hilfe eines Schrittmotors 6, der über die Leitung 7 von einem Steuergerät 8 gesteuert wird. Dieses weist einen mit einer Sonde 11 in der leitung 1 verbundenen Eingang 9 auf. Die Sonde kann z. B. eine pH-Elektrode sein. Ein weiterer Eingang 10 ist zur manuellen Verstellung der Sollwert-Vorgabe vorgesehen. Zur Ermittlung dieses Sollwertes sind voranstehend bereits ausführliche Hinweise gegeben. Es genügt, darauf hinzuweisen, daß der Sollwert pflanzenspezifisch und in Abhängigkeit von der Bodenbeschaffenheit bestimmt werden kann.

Die Sonde 11 zeigt bereits geringste Änderungen des pH-Wertes des imprägnierten Wassers an. Auf diese Werte reagiert das Steuergerät feinfühlig mit Steuersignalen für den Schrittmotor, der kontinuierlich und feinfühlig den Gaszustromquerschnitt des Ventils oder der Drossel 5 steuert.

Die Ansteuerung des Sollwertes erfolgt dabei in der in Fig. 2 gezeigten Weise durch Einpendeln des Ist-Wertes auf den eingestellten Sollwert. Der Einpendelungsvorgang vollzieht sich rasch und mit großer Genauigkeit.

Bei 16 kann ein Mengenmeßgerät in der Leitung 1 vorgesehen sein, das über das Steuergerät 8 ein Ventil 15 zur Grobsteuerung der Gaszufuhr betätigt.

An die Imprägnierungszone kann sich ausgangsseitig eine Reaktionsstrecke anschließen, die dem mit $CO_2$-Bläschen imprägniertem Wasser eine ausreichend Verweilzeit zur Verfügung stellt, wodurch das Volumen etwaiger Gasblasen durch Gasabsorption in nennenswertem Umfang abgebaut wird.

Wegen der geringen $CO_2$-Anteile ist es auch möglich, nur einen Teilstrom des benötigten Wassers zu imprägnieren und diesen mit den übrigen Wasseranteilen zu vermischen, und zwar so, daß das sich ergebende Mischwasser den gewünschten Sollwert an $CO_2$ annimmt. Auf diese Weise können mehrere hunderttausend Liter Wasser pro Stunde für die Bewässerung mit einfachen Mitteln und unter genauer Einhaltung der Vorgabe für den $CO_2$-Gehalt aufbereitet werden.

Als Beispiel werden folgende Versuchsergebnisse angeführt:

1. Winterweizen (Großflächenversuch) Boden: mittelschwer

Nach Auflaufen der Saat wurde in Abständen von 2 bis 3 Wochen insgesamt fünfmal je 300 Liter/Wasser/ha beregnet. Soweit erforderlich, wurden dem Gießwasser übliche Fungizide in der herkömmlichen Dosierung beigemischt. Der Brutto-$CO_2$-Einsatz für die Imprägnierung des Wassers betrug ca. 1,5 g/Liter. Durch Temperatur und Spritzverluste gelangten etwa 0,4 g/Liter oberirdisch auf die Pflanze.

Ergebnis:

Bei herkömmlicher Behandlung betrug der Kornertrag 87,8 dt/ha der Strohertrag 87,8 dt/ha und damit der C-Gehalt in der gesamten Biomasse 7480,56 kg/ha. Auf den nach dem Verfahren gemäß der Erfindung behandelten Flächen ergaben sich für den Kornertrag 92,7 dt/ha und 92,7 dt/ha für den Strohertrag, oder ein C-Gehalt in der Biomasse von 7898,04 kg/ha. Der Mehrertrag an Kohlenstoff der Biomasse macht 417,48 kg aus. Im Vergleich dazu betrug der durch das $CO_2$ (2,25 kg/ha) ursprünglich in das Gießwasser eingebrachte Anteil an Kohlenstoff nur 0,61 kg. Der Anteil von 417,48 kg Kohlenstoff entspricht 1531 kg/ha $CO_2$, den die nach der Erfindung behandelten Pflanzen mehr als unbehandelte Pflanzen aus der umgebenden Atmosphäre entnommen haben. Das entspricht einem Faktor von 684, bezogen auf den im Gießwasser enthaltenen $CO_2$-Anteil.

In diesem Fall ist die Bewässerung zur Hauptsache über oberirdische Pflanzenorgane erfolgt. Trotz der positiven Ergebnisse in bezug auf zusätzliche $CO_2$-Bindung aus der Atmosphäre, konnte der Einsatz von Pflanzenschutzmitteln halbiert werden.

2. Futterzuckerrüben: Boden: mittelschwer

Nachdem die Rüben eine Blattlänge von etwa 10-15 cm entwickelt hatten, wurde mit 300 m³ Wasser/ha bewässert. Der $CO_2$-Gehalt des Wassers wurde auf 0,25 kg/m³ eingestellt. Die im Wurzelbereich gemessenen $CO_2$-Werte lagen durchschnittlich nur um etwa 0,01 bis 0,02 g/Liter unter den Ausgangswerten. Zum Vergleich dazu wurde ein flächengleiches Feld mit der gleichen Menge Wasser, jedoch ohne $CO_2$ bewässert.

Bei Normalwasser ergab sich ein Rübenertrag von 717 dt/ha, ein krautertrag von 475 dt/ha und so ein Kohlenstoffanteil in der Biomasse von 6294 kg/ha. Die Werte für das nach der Erfindung behandelte Feld betrugen 900 dt/ha Rüben, 600 dt/ha Kraut und für den Kohlenstoff 7950 kg. Da reines $CO_2$ etwa 27% Kohlenstoff enthält, beträgt die über das Wasser zugeführte C-Menge etwa 20,5 kg. Durch den Mehrertrag der behandelten Pflanzen wurde ein Mehrertrsag von 1556 kg Kohlenstoff in den Pflanzen gefunden. Diese haben also 6072 kg/ha mehr an $CO_2$ aus der Umgebungsatmosphäre aufgenommen, als die unbehandelten Pflanzen. Bezogen auf die eingesetzte Menge an $CO_2$ ergibt sich ein Steigerungsfaktor von etwa 80.

Nach vorliegenden Angaben werden in den USA ca. 20 Millionen Hektar Ackerland schon jetzt künstlich bewässert. Würden nur diese Flächen nach dem Beispiel der Futterzuckerrüben behandelt und erhielte man dadurch ein Mehr an Biomasse von etwa 25%, so würden dadurch etwa 120 Millionen Tonnen $CO_2$ mehr aus der Atmosphäre in die Pflanzen eingebaut. Würde dieses Verfahren auch auf Felder ausgedehnt, die bisher nicht bewässert werden, ergäbe sich eine ungleich höhere Zahl.

Unbeachtet ist dabei der Nutzen geblieben, der bei Kulturpflanzen durch den Mehrertrag und durch Einsparung an Dünge- und chemischen Behandlungsmitteln und durch Verringerung anderer ökologischer Probleme (Belastung des Grundwassers, Nitratgehalt der zur Nahrung dienenden Pflanzen) zusätzlich entsteht.

Durch die Erfindung entsteht durch Erhöhung der Ernteerträge auch gegenüber allen bisherigen Verfahren ein erheblicher wirtschaftlicher Nutzeffekt. Wird dieser Nutzeffekt zur Oxidation von Kohlenstoff genutzt, so entsteht wiederum $CO_2$, das allerdings von $NO_x$ und $SO_2$ frei ist. Das bedeutet, daß der natürliche $CO_2$-Biokreislauf nicht gestört wird, d. h. über den Regen kann $CO_2$, wie im vorigen Jahrhundert, über Injektorwirkung an den Boden zurückgeführt werden.

Für die Zwecke der Erfindung kann $CO_2$ auch aus Abgasen, aus solchen von Brennkraftmaschinen ausgenutzt werden, soweit solche Abgase im ausreichenden Umfang aufgefangen und in Wassertanks eingeleitet werden können.

Der Faktor, um den die Pflanzen gegenüber dem im Gießwasser eingesetzten $CO_2$ ein zusätzliches $CO_2$-Volumen aus aus der Atmosphäre abbauen, kann je nach Pflanzenart bis zum Tausendfachen liegen.

**Ansprüche**

1. Verfahren zur Unterstützung des Abbaues von hohen $CO_2$-Anteilen der Atmosphäre über Kulturpflenzen in bodennahen Bereichen, dadurch **gekennzeichnet**, daß man die Aufnahmefähigkeit von Pflanzen, insbesondere von jüngeren Pflanzen, für in der Atmosphäre in übermaß enthaltenem $CO_2$-Gas biokatalytisch und/oder enzymatisch gegenüber der normalen, pflanzenspezifischen Aufnahmefähigkeit steigert, indem man die Kulturpflanzen wenigstens einmal pro Wachstumsperiode ober-oder unterirdisch bewässert, und das dazu verwendete Wasser mit Spuren an $CO_2$ und $H_2CO_3$ so anreichert, daß dieses bei Erreichen der Aufnahmeorgane, insbes. des Wurzelbereichs, einen pflanzenspezifischen und von der Boden- und Wasserbeschaffenheit abhängigen, optimalen vorbestimmten Gehalt an $CO_2$ bzw. $H_2CO_3$ oder deren Dissoziationsform aufweist.

2. Verfahren nach Anspruch 1, dadurch **gekennzeichnet**, daß man vor allem auch solche Pflanzen oder Gebeite, bei denen bzw. in denen eine Bewässerung aus klimatischen Gründen normalerweise nicht üblich oder nicht notwendig ist, wenigstens einmal pro Wachstumsperiode bewässert.

3. Verfahren nach Anspruch 1 oder 2, dadurch **gekennzeichnet**, daß man dem Wasser in Abhängigkeit von seiner Qualität, d. h. anteil von ionisationsfähigen Mineralien, und der Bodenbeschaffenheit zur Aktivierung der Photosynthese eines oder mehrere Spurenelemente, insbes. aus der Gruppe Mn, Mg, Zn, und $Fe_2$ zufügt.

4. Verfahren nach einem der Ansprüche 1 bis 3, dadurch **gekennzeichnet**, daß die Anreicherung des Wassers mit $CO_2$ so gesteuert wird, das das Wasser bei Erreichen ober-oder unterirdischer Aufnahmeorgane der Pflanze einen mengenmäßigen Anteil an $CO_2$ enthält, der einen optimalen Multiplikationsfaktor des zugeführten Kohlendioxids zur Aufnahme und Anlage der Pflanze zuläßt.

5. Verfahren nach einem der Ansprüche 1 bis 4, dadurch **gekennzeichnet**, daß die Ansteuerung des vorbestimmten $CO_2$-Gehalts des Wassers bei Erreichen der pflanzlichen Aufnahmeorgane, insbesondere des Wurzelbereichs, durch Anreicherung des Wassers mit $CO_2$ innerhalb einer $CO_2$-Imprägnierungszone in Abhängigkeit von dem Druck und der chemischen Beschaffenheit des Wassers vorgenommen wird.

6. Verfahren nach einem der Ansprüche 1 bis 5, dadurch **gekennzeichnet**, daß man die obere Grenze des Gehalts an $CO_2$ und $H_2CO_3$ im Wasser bei Erreichen des Wurzelbereichs in Abhängigkeit von der Bodenbeschafenheit auf einen pflanzenspezifischen Wert festsetzt, bei dem die Zunahme des Wurzelwachstums einen Maximumwert erreicht oder leicht überschreitet.

7. Verfahren zum Steigern des Ernteertrags von Freiland-Pflanzenkulturen, insbesondere auf leichten Böden oder Böden in trockenen oder ariden Gebieten, dadurch **gekennzeichnet**, daß man die Aufnahmefähigkeit der Pflanzen für $CO_2$ aus der Atmosphäre und von Nährstoffen auf biokatalytischem und/oder enzymatischem Wege anregt, indem man oberirdisch, insbes. aber den Wurzelbereich der Pflanzen, während einer Wachstumsperiode einmal, mehrmals oder dauernd bewässert und das dazu verwendete Wasser mit Spuren an $CO_2$ und $H_2CO_3$ anreichert, und zwar so, daß das Wasser kontinuierlich durch eine $CO_2$-Imprägnierungszone geleitet wird, und daß die $CO_2$-Gaszufuhr kontinuierlich und stufenlos über einen eng begrenzten, auf positive ebenso wie auf negative Ionisationsprodukte im Wasser optimal abgestellten, pflanzenspezifischen pH-Wert geregelt wird.

8. Verfahren nach Anspruch 7, dadurch **gekennzeichnet**, daß der pro Liter Wasser aufgenommene Gehalt an $CO_2$ auf einen Wert von maximal 0,5 g, vorzugsweise auf einen Wert von 0,05 - 0,3 g pro Liter eingesteuert wird.

9. Verfahren nach Anspruch 7 oder 8, dadurch **gekennzeichnet**, daß der pH-Wert in engen Grenzen auf einen Wert zwischen 5,5 und 7,5, vorzugsweise zwischen 6,0 und 7,0 geregelt wird.

10. Verfahren nach Anspruch 7, dadurch **gekennzeichnet**, daß der Säure-Base-Wert des mit Spuren an $CO_2$ angereicherten Wassers fortlaufend gemessen und schon bei geringen Abweichungen von einem pflanzenspeizifischen Sollwert ein Schrittmotor von Veränderung eines veränderlichen Gasdurchtrittsquerschnitts einer Zuführungsdüse oder einer Drosseleinrichtung, durch die das $CO_2$ der Imprägnierungszone zugeführt wird, gesteuert wird.

11. Verfahren nach Anspruch 7, dadurch **gekennzeichnet**, daß die $CO_2$-Gaszufuhr zu der Imprägnierungszone in Abhängigkeit von dem Druck des der Imprägnierungszone zuströmenden Wassers zunächst grob voreingesteuert wird, bevor die Feinsteuerung über den pflanzenspezifischen pH-Wert automatisch durchgeführt wird.

12. Verfahren nach den Ansprüchen 1 bis 11, dadurch **gekennzeichnet**, daß mit der exakt gesteuerten Zufuhr von $CO_2$, $H_2CO_3$ mit den zur vermehrten $CO_2$-Bindung ausgelösten biokatlytischen Vorgängen im überschuß eingelagerten Nährstoffspeicher, insbesondere vorhandene Nitratbestände, intensiv abgebaut werden.

Fig 1

Fig 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,P,<br>X | US-A-4835903 (KUCKENS)<br>* Spalte 1, Zeile 57 - Spalte 2, Zeile 47 *<br>* Spalte 6, Zeile 41 - Spalte 8, Zeile 51; Figur 1 * | 1, 7-9,<br>11, 12 | A01G7/02 |
| X | DE-A-2602759 (CONTROLLINVEST)<br>* Seite 12, letzter Absatz - Seite 17, Absatz 1; Figur 1 * | 1, 3, 6,<br>7, 11 | |
| X | DE-A-3341745 (KUCKENS)<br>* Seite 7, Absatz 2 - Seite 9, letzter Absatz * | 1, 2, 4 | |
| X | DE-A-3331818 (MEYNS)<br>* Seite 14, Absatz 2 - Seite 17, Absatz 2; Figur 1 * | 1, 5, 7,<br>11 | |
| Y | | 10 | |
| Y | DE-C-3720621 (KUCKENS)<br>* Spalte 4, Zeilen 1 - 7 *<br>* Spalte 5, Zeilen 40 - 46 * | 10 | |

| | RECHERCHIERTE SACHGEBIETE (Int. Cl.5 ) |
|---|---|
| | A01G |

Der vorliegende Recherchenbericht wurde für alle Patentansprüche erstellt

| Recherchenort | Abschlußdatum der Recherche | Prüfer |
|---|---|---|
| DEN HAAG | 31 JANUAR 1990 | HERYGERS J.J. |